# EUROPEAN PATENT APPLICATION

(11) **EP 2 530 585 A1**
(43) Date of publication of application: **05.12.2012**
(21) Application number: 12170181.7
(22) Date of filing: 31.05.2012
(51) Int. Cl.: G06F 9/445

(54) **Method of handling periodic update of software component and related communication device**

(30) Priority: 01.06.2011 US 201161492367 P
(71) Applicant: HTC Corporation, Taoyuan County 330 (TW)
(72) Inventor: Yu, Chun-Ta, 330 Taoyuan City (TW); Tseng, Yin-Yeh, 330 Taoyuan City (TW)
(74) Representative: Ljungberg, Robert

(57) **Abstract**

A method of handling a periodic update of a software component in a software component management object (SCOMO) client in a service system is disclosed. The method is utilized in the SCOMO client, and comprises configuring a first node in a SCOMO tree corresponding to the software component, for storing timing information of the periodic update, wherein the SCOMO tree is stored in the SCOMO client; and transmitting a request to a SCOMO server of the service system according to the timing information, for requesting an update of the software component.

## Description

### Cross Reference To Related Applications

This application claims the benefit of U.S. Provisional Application No. 61/492,367, filed on June 1, 2011 and entitled "Periodically Update Software Components Mechanism for Software Component Management Object", the contents of which are incorporated herein in their entirety.

### Background of the Invention

### 1. Field of the Invention

The present invention relates to a method used in a service system and related communication device, and more particularly, to a method of handling a periodic update of a software component and related communication device.

### 2. Description of the Prior Art

Open Mobile Alliance (OMA) is founded to develop OMA specifications for mobile services to meet users' needs. Furthermore, the OMA specifications aim to facilitate providing of the mobile services which are interoperable across geographic areas (e.g. countries), operators, service providers, networks, operation systems and mobile devices. In detail, the mobile services conforming to the OMA specifications can be used by the users without being restricted to particular operators and service providers. The mobile services conforming to the OMA specifications are also bearer agnostic, i.e., the bearer that carries the mobile services can be a second generation (2G) mobile system such as Global System for Mobile Communications (GSM), Enhanced Data rates for GSM Evolution (EDGE) or General Packet Radio Service (GPRS), or a third generation (3G) and beyond mobile system such as Universal Mobile Telecommunications System (UMTS), Long Term Evolution (LTE) or LTE-Advanced (LTE-A). Further, the mobile services conforming to the OMA specifications can be executed on various operation systems such as Windows, Android or Linux operated on various mobile devices. Therefore, industries providing the mobile devices or the mobile services supporting the OMA specifications can benefit from a largely growing market enabled by interoperability of the mobile services. Besides, the users use the mobile devices or the mobile services supporting the OMA specifications can also have a better experience due to the interoperability of the mobile services.

In OMA Device Management (DM) working group, Software Component Management Object (SCOMO) is proposed to enable a remote software component management (e.g., operation) within a SCOMO client. For example, the SCOMO can be used for managing a software component such as an antivirus software, a plug-in of a browser, an application, etc. Operations defined by the SCOMO for managing the software component include delivery, download, installation/uninstallation, update, removal, activation/de-activation of the software component, and is not limited. In addition, retrieval of an inventory including software components in the mobile device is also supported. The inventory includes the software components delivered via the SCOMO, and can also include those are not installed via the SCOMO, e.g., the software components in a factory of the mobile device or the software components installed by the end user.

Whether an update of a software component for a SCOMO client is available can be determined (e.g., discovered, triggered) by a SCOMO server of the service system. Alternatively, the SCOMO client can contact the SCOMO server for requesting the update, e.g., according to an input of a user of the SCOMO client. That is, the update may not be realtime (i.e., frequent enough) for the software component. A requirement of "Support the client to request the server for the software component update periodically" is described in the SCOMO 1.1 Work Item, for supporting the SCOMO client to request the update periodically, wherein detail of the periodic update is lacked. Thus, implementation and realization of the requirement should be defined, and is a topic to be addressed.

### Summary of the Invention

The present invention therefore provides a method and related communication device for handling a periodic update of a software component to solve the abovementioned problem.

A method of handling a periodic update of a software component in a software component management object (SCOMO) client in a service system is disclosed. The method is utilized in the SCOMO client, and comprises configuring a first node in a SCOMO tree corresponding to the software component, for storing timing information of the periodic update, wherein the SCOMO tree is stored in the SCOMO client; and transmitting a request to a SCOMO server of the service system according to the timing information, for requesting an update of the software component.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a service system according to an example of the present invention.

Fig. 2 is a schematic diagram of a communication device according to an example of the present invention.

Fig. 3 is a flowchart of a process according to an example of the present invention.

### Detailed Description

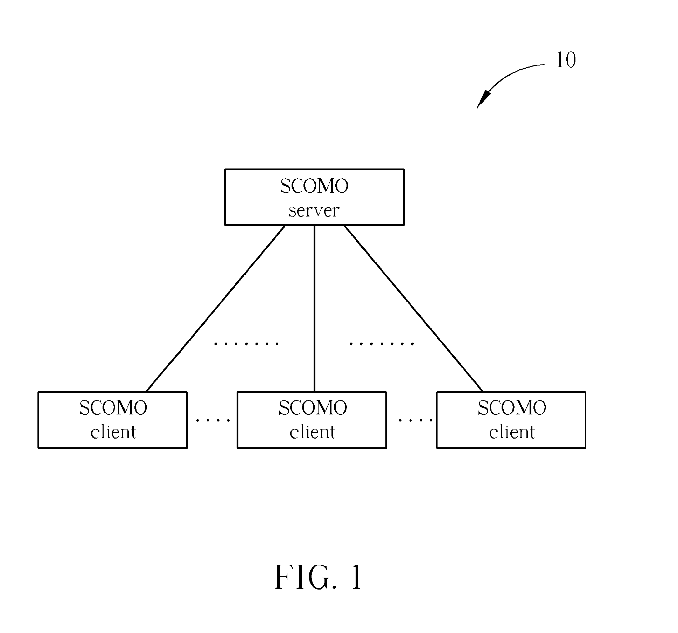

Please refer to Fig. 1, which is a schematic diagram of a service system 10 according to an example of the present invention. The service system 10 supports Software Component Management Object (SCOMO) developed by Open Mobile Alliance (OMA), and is briefly composed of a SCOMO server and a plurality of SCOMO clients supporting the SCOMO. Further, the SCOMO server can manage a software component (e.g., software or firmware) in the SCOMO client by performing operations such as delivery, download, installation/uninstallation, update, removal, activation/de-activation on the software component according to the SCOMO. For example, the software component can be a deployment component which is defined for management purposes.

In Fig. 1, the SCOMO clients and the SCOMO server are simply utilized for illustrating a structure of the service system 10. Practically, the SCOMO clients can be inatalled in desktops and home electronics which are fixed at a certain position. Alternatively, the SCOMO clients can be installed in mobile devices such as mobile phones, laptops, tablet computers, electronic books, and portable computer systems. The service system can be bearer agnostic, i.e., the bearer used for exchanging information (e.g., message, request, response, etc.) between the SCOMO clients and the SCOMO server can be a second generation (2G) mobile system such as Global System for Mobile Communications (GSM), Enhanced Data rates for GSM Evolution (EDGE) or General Packet Radio Service (GPRS), a third generation (3G) and beyond mobile system such as Universal Mobile Telecommunications System (UMTS), Long Term Evolution (LTE) or LTE-Advanced, or even a wireline communication system such as an Asymmetric Digital Subscriber Line (ADSL).

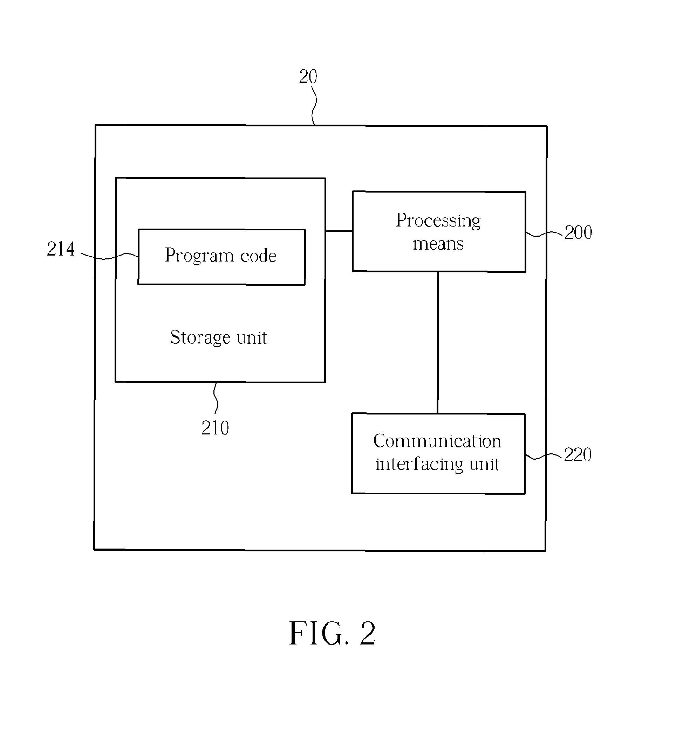

Please refer to Fig. 2, which is a schematic diagram of a communication device 20 according to an example of the present invention. The communication device 20 can be devices wherein a SCOMO client or the SCOMO server shown in Fig. 1 is installed. The communication device 20 may include a processing means 200 such as a microprocessor or an Application Specific Integrated Circuit (ASIC), a storage unit 210 and a communication interfacing unit 220. The storage unit 210 may be any computer-readable storage medium that can store a program code 214, accessed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk, and optical data storage device. The communication interfacing unit 220 is preferably a transceiver, and can transmit/receive information (e.g., message, request, response, etc.) according to processing results of the processing means 200.

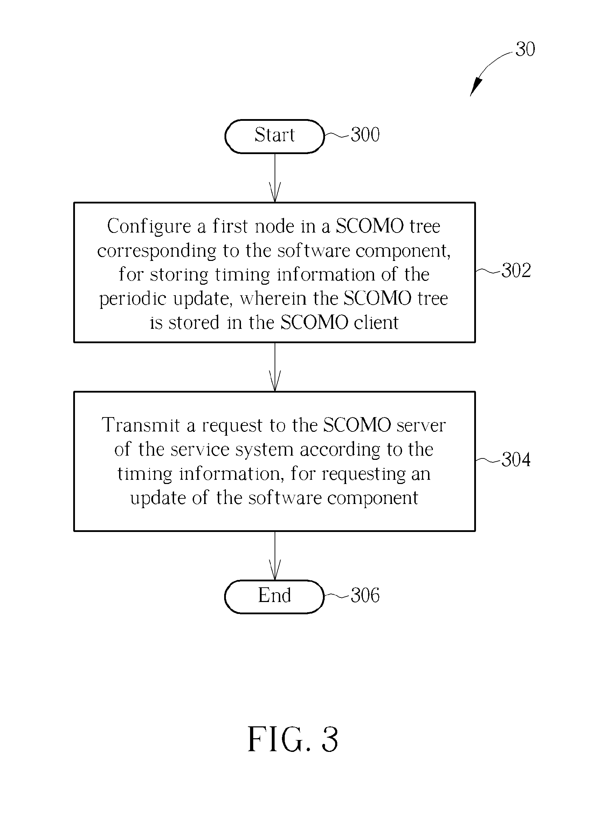

Please refer to Fig. 3, which is a flowchart of a process 30 according to an example of the present invention. The process 30 is utilized in a SCOMO client shown in Fig. 1, for handling a periodic update of a software component in the SCOMO client. The process 30 may be compiled into the program code 214 and includes the following steps:

Step 300: Start.

Step 302: Configure a first node in a SCOMO tree corresponding to the software component, for storing timing information of the periodic update, wherein the SCOMO tree is stored in the SCOMO client.

Step 304: Transmit a request to the SCOMO server of the service system according to the timing information, for requesting an update of the software component.

Step 306: End.

According to the process 30, the SCOMO client configures a first node in a SCOMO tree corresponding to the software component, for storing timing information of the periodic update, wherein the SCOMO tree is stored in the SCOMO client. Then, the SCOMO client can transmit a request to the SCOMO server of the service system according to the timing information, for requesting an update of the software component. For example, the SCOMO server may check whether the update (e.g., new version) of the software component is available after receiving the request. Then, the SCOMO server performs the update of the software component, if the update is available. In other words, the SCOMO client does not need to wait for an update of the software component initiated and performed by the SCOMO server, but the SCOMO client can periodically requests the SCOMO server to check and perform the update for the software component, according to the timing information stored in the first node in the SCOMO tree. Therefore, according to the process 30, the SCOMO client can request the update of the software component periodically according to the timing information without possible restriction (e.g., infrequent update) caused by the SCOMO server.

Please note that, a spirit of the process 30 is that a SCOMO client can request an update of a software component periodically according to timing information without waiting for the SCOMO server. Realization of the process 30 is not limited. For example, detail of the timing information in the first node is not limited. The timing information can include an interval value which is a period used by the SCOMO client to transmit a request to the SCOMO server periodically. That is, the SCOMO client transmits the request to the SCOMO server for requesting the update periodically, after each time the interval value is reached. For example, the SCOMO client can transmit the request to the SCOMO server at 7:00 AM each Monday, i.e., the interval value is a week. Besides, the interval value can also be an hour or a day, and is not limited. Alternatively, the timing information can include a specific time at which the SCOMO client transmits the request to the SCOMO server for requesting the update. The specific time can be updated (i.e., renewed) for a next transmission of the request by the SCOMO server, after the request is transmitted. That is, a period used for transmitting the request in this case may not be a fixed value.

Besides, except the first node, a second node can be configured in the SCOMO tree of the SCOMO client, for storing a Boolean value indicating whether the periodic update is enabled. For example, the periodic update is enabled by setting the Boolean value to "1" (or "true"), and the periodic update is disabled by setting the Boolean value to "0" (or "false"). Furthermore, a third node can be configured in the SCOMO tree of the SCOMO client, for storing a client initiated update alert type indicating a format of the request. Preferably, the client initiated update alert type can be one of UpdateDeviceRequest, UpdateUserRequest, CheckVersionDeviceRequest and CheckVersionUserRequest which are supported by the SCOMO, but is not limited to the above four alert types. On the other hand, a fourth node can be configured in the SCOMO tree of the SCOMO client, for storing server location information indicating the SCOMO client to transmit the request according to the server location information. For example, a software component may be installed in the SCOMO client by a SCOMO server A. However, the SCOMO client is not required to request an update of the software component from the SCOMO server A, but can request the update of the software component from another SCOMO server, e.g., a SCOMO server B. That is, if the server location information of the SCOMO server B is stored in the fourth node, the SCOMO client can transmit the request to the SCOMO server B according to the server location information, for requesting the update.

Those skilled in the art should readily make combinations, modifications and/or alterations on the abovementioned examples. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 20.

To sum up, the present provides a method for handling a periodic update of a software component. According to the present invention, a SCOMO client can request an update of the software component from a SCOMO server periodically according to timing information stored in a node of a SCOMO tree. Possible restriction (e.g., infrequent update) caused by the SCOMO server is removed, and convenience of the SCOMO is improved.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a periodic update of a software component in a software component management object (SCOMO) client in a service system, the method utilized in the SCOMO client and comprising:
configuring a first node in a SCOMO tree corresponding to the software component,
for storing timing information of the periodic update, wherein the SCOMO tree is stored in the SCOMO client; and
transmitting a request to a SCOMO server of the service system according to the timing information, for requesting an update of the software component.

2. The method of claim 1, wherein the timing information comprises an interval value for transmitting the request.

3. The method of claim 1, wherein the timing information comprises a specific time for transmitting the request, and the specific time is updated by the SCOMO server after the request is transmitted.

4. The method of claim 1, further comprising:
configuring a second node in the SCOMO tree of the SCOMO client, for storing a Boolean value indicating whether the periodic update is enabled.

5. The method of claim 1, further comprising:
configuring a third node in the SCOMO tree of the SCOMO client, for storing a client initiated update alert type indicating a format of the request.

6. The method of claim 5, wherein the client initiated update alert type is one of UpdateDeviceRequest, UpdateUserRequest, CheckVersionDeviceRequest and CheckVersionUserRequest supported by SCOMO.

7. The method of claim 1, further comprising:
configuring a fourth node in the SCOMO tree of the SCOMO client, for storing server location information indicating the SCOMO client to transmit the request according to the server location information.

8. The method of claim 1, wherein the SCOMO server checks whether the update of the software component is available after receiving the request, and performs the update of the software component, if the update is available.

9. A non-transitory computer-readable storage medium storing a program, when being executed by a processor, causes the processor to perform a method of handling a periodic update of a software component in a software component management object (SCOMO) client in a service system, the method comprising:
configuring a first node in a SCOMO tree corresponding to the software component,
for storing timing information of the periodic update, wherein the SCOMO tree is stored in the SCOMO client; and
transmitting a request to a SCOMO server of the service system according to the timing information, for requesting an update of the software component.

10. The non-transitory computer-readable storage medium of claim 9, wherein the timing information comprises an interval value for transmitting the request, and/or wherein the timing information comprises a specific time for transmitting the request, and the specific time is updated by the SCOMO server after the request is transmitted.

11. The non-transitory computer-readable storage medium of claim 9, wherein the method further comprises:
configuring a second node in the SCOMO tree of the SCOMO client, for storing a Boolean value indicating whether the periodic update is enabled.

12. The non-transitory computer-readable storage medium of claim 9, wherein the method further comprises:
configuring a third node in the SCOMO tree of the SCOMO client, for storing a client initiated update alert type indicating a format of the request.

13. The non-transitory computer-readable storage medium of claim 9, wherein the method further comprises:
configuring a fourth node in the SCOMO tree of the SCOMO client, for storing server location information indicating the SCOMO client to transmit the request according to the server location information.

14. The non-transitory computer-readable storage medium of claim 9, wherein the SCOMO server checks whether the update of the software component is available after receiving the request, and performs the update of the software component, if the update is available.

15. A communication device for handling a periodic update of a software component for a software component management object, SCOMO, client, the communication device comprising:
means for configuring a first node in a SCOMO tree corresponding to the software component, for storing timing information of the periodic update, wherein the SCOMO tree is stored in the SCOMO client; and
means for transmitting a request according to the timing information, for requesting an update of the software component.
